# EUROPÄISCHE PATENTSCHRIFT

(11) **EP 4 034 793 B1**
(45) Veröffentlichungstag und Bekanntmachung des Hinweises auf die Patenterteilung: **07.06.2023**
(21) Anmeldenummer: 20838985.8
(22) Anmeldetag: 18.12.2020
(51) Int. Cl.: F16L 27/04

(54) **SCHLAUCHKUPPLUNG**
HOSE COUPLING
RACCORD DE TUYAU

(30) Priorität: 14.02.2020 DE 202020100810 U
(43) Veröffentlichungstag der Anmeldung: 03.08.2022
(73) Patentinhaber: Neoperl GmbH, 79379 Müllheim (DE)
(72) Erfinder: KURY, Werner, 79379 Müllheim (DE)
(74) Vertreter: Mertzlufft-Paufler, Cornelius
(86) Internationale Anmeldenummer: PCT/EP2020/087303
(87) Internationale Veröffentlichungsnummer: WO 2021/160328

(56) Entgegenhaltungen:
- EP-A1- 3 112 737
- CH-A- 386 940
- US-A1- 2016 003 396

## Beschreibung

Die Erfindung betrifft eine Schlauchkupplung mit einem Kupplungselement, das an einem Schlauchende einer flexiblen Schlauchleitung vorgesehen ist, und mit einem Kupplungs-Gegenelement, das mit dem Kupplungselement lösbar verbindbar ist, wobei im Kupplungselement und im Kupplungs-Gegenelement jeweils zumindest ein Fluidkanal geführt ist, und wobei die Fluidkanäle des Kupplungselements sowie des damit verbundenen Kupplungs-Gegenelements in einer Halteposition von Kupplungselement und Kupplungs-Gegenelement flüssigkeitsdicht miteinander verbunden sind.

Sanitäre Auslaufarmaturen, Toiletten-Spülkästen, Wasch- oder Geschirrspülmaschinen und andere Wasserverbrauchsstellen werden zunehmend über flexible Schlauchleitungen an das Wasserversorgungsnetz angeschlossen. Dabei sind die Schlauchleitungen beispielsweise mit der sanitären Auslaufarmatur und/oder dem zulaufseitigen Wasseranschluss über eine Schlauchkupplung der eingangs erwähnten Art verbunden. Die vorbekannten Schlauchkupplungen weisen dazu ein Kupplungselement auf, das mit einem Kupplungs-Gegenelement über eine Schraubverbindung lösbar verbindbar ist. Dabei besteht das Problem, dass das am Schlauchende der flexiblen Schlauchleitung vorgesehene Kupplungselement unter beengten Platzverhältnissen nur mit erheblichem Aufwand mit dem Kupplungs-Gegenelement verschraubt werden kann, zumal die flexible Schlauchleitung und das mit ihr drehfest verbundene Kupplungselement sich Drehbewegungen um die Schlauch-Längsachse zu widersetzen scheint.

Aus US 2016/0003396 A1 ist ein Flüssigkeitsanschluss mit einem Muffenteil, einem kugelförmigen Ventil, das in den Muffenteil eingesetzt ist, und einem Steckerteil, das so konfiguriert ist, dass es an seinem Spitzenabschnitt in das kugelförmige Ventil eingesetzt werden kann, bekannt.

Aus EP 3 112 737 A1 ist eine Kupplungsanordnung mit Kuppelkörpern und Kupplungsklammer für Rohre bekannt, wobei einer der Kupplungskörper mit einem Körperteil in ein Körperteil des anderen Kupplungskörpers mit seinem vorderen Ende durch ein vorderes Ende des aufnehmenden Kupplungskörpers einsetzbar ist.

Aus CH 386 940 ist eine Ablaufvorrichtung an Unterputz-Spülkästen bekannt, wobei in einem unterhalb des Spülkastens ebenfalls unter Putz verlegten Abdeckkastens ein Ablauf-Winkelstück vertikal verschiebbar angeordnet ist, wobei eine Dichtung vorgesehen ist, die in allen Verschiebungslagen den vertikalen Schenkel des Winkelstücks an einem vom Spülkasten kommenden Ablaufstutzen abdichtet, und wobei ferner der Abdeckkasten eine sich in vertikaler Richtung erstreckende Öffnung aufweist, um die Verschiebung des ablaufseitigen Endes des Ablauf-Winkelstücks zu gestatten.

Es besteht daher die Aufgabe, eine Schlauchkupplung der eingangs erwähnten Art zu schaffen, die sich durch eine einfache, schnelle und sichere Verbindung des Kupplungselements und des Kupplungs-Gegenelements auszeichnet.

Die erfindungsgemäße Lösung dieser Aufgabe besteht bei der Schlauchkupplung der eingangs erwähnten Art insbesondere darin, dass das Kupplungselement oder das Kupplungs-Gegenelement einen Kupplungskopf aufweist, der in einer Schwenkposition in eine Kupplungskopf-Aufnahme des jeweils anderen Elements der Schlauchkupplung einsetzbar ist, und dass das Kupplungselement und das Kupplungs-Gegenelement zwischen der Schwenkposition und der Halteposition relativ zueinander verschwenkbar sind, in welche Halteposition der Kupplungskopf in der Kupplungskopf-Aufnahme gehalten ist.

Die erfindungsgemäße Schlauchkupplung weist ein Kupplungselement auf, das an einem Schlauchende einer flexiblen Schlauchleitung vorgesehen ist. Mit diesem Kupplungselement ist ein Kupplungs-Gegenelement der Schlauchkupplung lösbar verbindbar. Im Kupplungselement und im Kupplungs-Gegenelement ist jeweils zumindest ein Fluidkanal geführt, wobei die im Kupplungselement beziehungsweise im Kupplungs-Gegenelement befindlichen Fluidkanäle in einer Halteposition von Kupplungselement und Kupplungs-Gegenelement flüssigkeitsdicht miteinander verbunden sind. Dabei weist das Kupplungselement oder das Kupplungs-Gegenelement der erfindungsgemäßen Schlauchkupplung einen Kupplungskopf auf, der in einer Schwenkposition in eine Kupplungskopf-Aufnahme des jeweils anderen Elements der Schlauchkupplung einsetzbar ist. Um das Kupplungselement und das Kupplungs-Gegenelement miteinander flüssigkeitsdicht zu verbinden, sind das Kupplungselement und das Kupplungs-Gegenelement zwischen der Schwenkposition und der Halteposition relativ zueinander verschwenkbar, in welcher Halteposition der Kupplungskopf in der Kupplungskopf-Aufnahme gehalten ist. Da bei der erfindungsgemäßen Schlauchkupplung das Kupplungselement mit dem Kupplungs-Gegenelement lediglich durch eine Schwenkbewegung in die Halteposition miteinander verbunden werden kann, und da zum Verbinden von Kupplungselement und Kupplungs-Gegenelement eine Schraubverbindung nicht benötigt wird, zeichnet sich die erfindungsgemäße Schlauchkupplung durch die einfache, schnelle und sichere Verbindung seines Kupplungselements und seines Kupplungs-Gegenelements aus.

Um die Schwenkbewegung des Kupplungskopfes in der Kupplungskopf-Aufnahme zu vereinfachen und um das Kupplungselement um das Kupplungs-Gegenelement in der Halteposition dicht miteinander zu verbinden, ist der Kupplungskopf als Kugelkopf ausgebildet und die Kupplungskopf-Aufnahme als vorzugsweise kugelige Gelenkpfanne ausgestaltet.

Die flüssigkeitsdichte Verbindung der erfindungsgemäßen Schlauchkupplung im Bereich ihres Kupplungselements, beziehungsweise des Kupplungs-Gegenelements, wird noch zusätzlich begünstigt, wenn der Kupplungskopf oder die Kupplungskopf-Aufnahme zumindest eine umlaufende Dichtung trägt, die an dem jeweils anderen Element der Schlauchkupplung dichtend anliegt.

So kann beispielsweise in der Kupplungskopf-Aufnahme eine umlaufende Nut vorgesehen sein, in der ein Dichtring einliegt, welcher Dichtring am Kupplungskopf der Schlauchkupplung dichtend anliegt.

Eine besonders vorteilhafte Ausführungsform, bei der in allen Schwenkpositionen von Kupplungselement und Kupplungs-Gegenelement eine hohe Dichtigkeit gewährleistet ist, sieht vor, dass der Kupplungskopf in einer quer zur Kupplungskopf-Längsachse orientierten Querschnittsebene, vorzugsweise im Bereich des Äquators der Kugelform des Kugelkopfes, eine umlaufende Dichtung trägt, welche Dichtung in der Halteposition an einer die Kupplungskopf-Aufnahme begrenzenden Wandung dicht anliegt.

Eine konstruktiv einfache und besonders vorteilhafte Ausführungsform gemäß der Erfindung sieht vor, dass das Kupplungselement hülsenförmig ausgebildet ist, und dass der der flexiblen Schlauchleitung zugewandte Teilbereich des Kupplungselements als Anschlussstutzen ausgebildet ist, auf welchen Anschlussstutzen das zugeordnete Schlauchende der Schlauchleitung aufschiebbar ist. Um das den Anschlussstutzen umgreifende Schlauchende gegen ein axiales Abziehen vom Kupplungselement zu sichern, kann es vorteilhaft sein, wenn der Anschlussstutzen an seinem Stutzen-Außenumfang eine Halteprofilierung trägt. Damit sich das elastische Material der flexiblen Schlauchleitung im Bereich des Schlauchendes in die Halteprofilierung eingraben kann, ist es vorteilhaft, wenn das auf den Anschlussstutzen aufgeschobene Schlauchende von einer verpressten Crimp- oder Quetschhülse umschlossen ist. Mittels dieser verpressten Crimp- oder Quetschhülse wird das Schlauchende der flexiblen Schlauchleitung fest und sicher auf dem Anschlussstutzen des Kupplungselements gehalten.

Um den Schiebeweg beim Aufschieben der flexiblen Schlauchleitung auf den Anschlussstutzen zu begrenzen, ist es vorteilhaft, wenn das Kupplungselement außenumfangsseitig einen Ringflansch oder Ringabsatz aufweist, der als Schiebeanschlag beim Aufschieben des zugeordneten Schlauchendes der Schlauchleitung dient.

Eine besonders einfache und zweckmäßige Ausführungsform gemäß der Erfindung sieht vor, dass das Kupplungselement an seinem dem Anschlussstutzen abgewandten Hülsenendbereich den Kugelkopf trägt.

Damit das Kupplungselement in der Halteposition sicher und fest im Kupplungs-Gegenelement gehalten ist, sieht eine bevorzugte Weiterbildung gemäß der Erfindung vor, dass in dem über das Schlauchende der Schlauchleitung vorstehenden Hülsen-Teilbereich des Kupplungselementes außenumfangsseitig ein Halteflansch vorsteht, der in der Halteposition zumindest bereichsweise eine Haltewandung hintergreift, welche Haltewandung in Einschieberichtung vor der Kupplungs-Aufnahme angeordnet ist. Da bei dieser weiterbildenden Ausführungsform das in das Kupplungs-Gegenelement eingeschobene Kupplungselement mit seinem außenumfangsseitig vorstehenden Halteflansch die Haltewandung hintergreift, wird das Kupplungselement gegen ein unbeabsichtigtes axiales Herausziehen aus dem Kupplungs-Gegenelement gesichert.

Um die das Kupplungselement in der Halteposition sichernde Haltewandung auf einfache Weise auszubilden, ist es vorteilhaft, wenn in Einschieberichtung vor der Kupplungs-Aufnahme eine Haltenut vorgesehen ist, deren der Kupplungskopf-Aufnahme abgewandte Nutwand als Haltewandung ausgebildet ist.

Der Halteflansch lässt sich auf einfache Weise derart in die Haltenut einschränken, bis der Halteflansch die als Haltewandung ausgebildete Nutwand hintergreift, wenn die Haltenut einen trapez- oder kegelförmigen Querschnitt aufweist, dessen größte lichte Weite im Bereich der Nutöffnung vorgesehen ist.

Das Kupplungselement lässt sich in der Halteposition auf einfache Weise am Kupplungs-Gegenelement befestigen und gegen ein unbeabsichtigtes Verschwenken aus der Halteposition sichern, wenn der Schlauchkupplung wenigstens ein Sicherungsmittel zugeordnet ist, mit dessen Hilfe das Kupplungselement am Kupplungs-Gegenelement gegen ein Ausschwenken aus der Halteposition gehalten und gesichert ist.

Dabei kann das Sicherungsmittel als Kabelbinder, als Tape, als Klettband, als U-Bügel oder als Halteklammer ausgebildet sein.

Eine besonders einfache und vorteilhafte Ausführungsform gemäß der Erfindung sieht vor, dass am Kupplungs-Gegenstück zumindest eine Halteöse für das Sicherungsmittel vorgesehen ist, und dass das die Schlauchleitung oder das Kupplungselement umschlingende Sicherungsmittel die Halteöse durchsetzt.

Die erfindungsgemäße Schlauchleitung lässt sich überall vorteilhaft einsetzen, wo Fluide zumindest abschnittsweise in einer flexiblen Schlauchleitung geführt werden. Eine bevorzugte Ausführungsform gemäß der Erfindung sieht jedoch vor, dass die Schlauchkupplung in eine sanitäre Wasserleitung einsetzbar ist. Dabei kann es vorteilhaft sein, wenn die Schlauchkupplung am Wassereingang oder am Wasserzulauf eines Toiletten-Spülkastens anordenbar ist.

Weiterbildungen gemäß der Erfindung ergeben sich aus der nachstehenden Figurenbeschreibung in Verbindung mit den Ansprüchen sowie der Zeichnung. Nachstehend wird die Erfindung anhand bevorzugter Ausführungsbeispiele noch näher beschrieben.

Es zeigt:

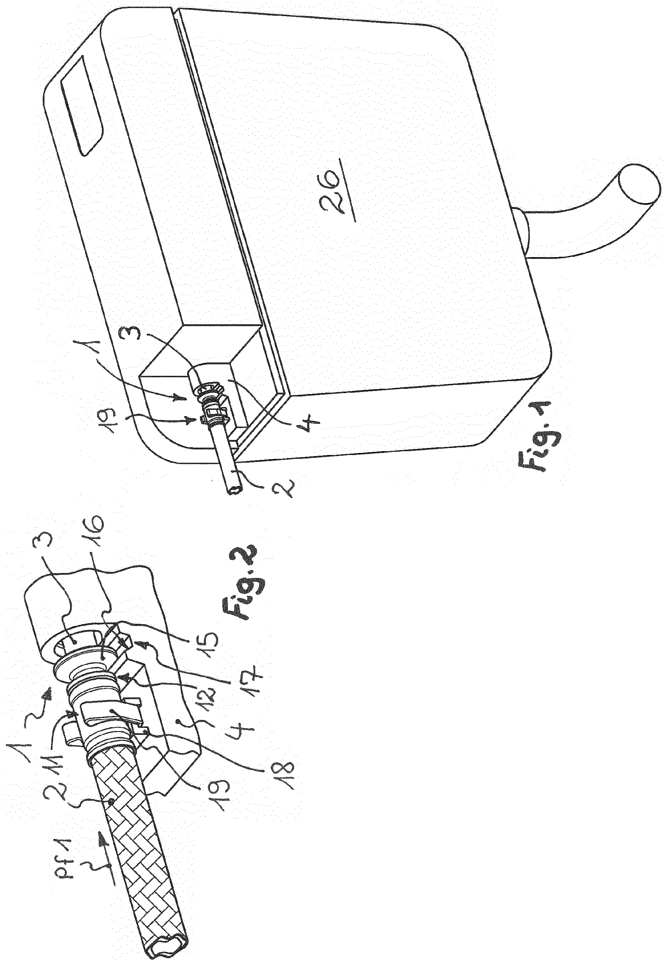

- Fig. 1: einen Toiletten-Spülkasten, dessen Wasserzulauf über eine flexible Schlauchleitung an das Wasserversorgungsnetz angeschlossen ist, wobei der Toiletten-Spülkasten und die Schlauchleitung über eine Schlauchkupplung miteinander verbunden sind, die ein Kupplungselement und ein damit lösbar verbindbares Kupplungs-Gegenelement hat und wobei das Kupplungselement und das Kupplungs-Gegenelement relativ zueinander zwischen einer Schwenkposition und einer Halteposition verschwenkbar sind, in welcher hier gezeigten Halteposition das Kupplungselement und das Kupplungs-Gegenelement aneinander gehalten sind,
- Fig. 2: das am Toiletten-Spülkasten gemäß Figur 1 unverrückbar gehaltene Kupplungs-Gegenelement und das damit lösbar verbundene Kupplungselement in der Halteposition,
- Fig. 3: das hülsenförmige Kupplungselement der in den Figuren 1 und 2 gezeigten Schlauchkupplung vor dem Einsetzen in das Kupplungs-Gegenelement, wobei der dem Kupplungs-Gegenelement zugewandte Hülsenendbereich des Kupplungselements als kugelförmiger Kupplungskopf ausgebildet und der abgewandte Hülsenendbereich als Anschlussstutzen ausgestaltet ist, auf den die Schlauchleitung aufgeschoben werden kann,
- Fig. 4: die Schlauchkupplung aus den Figuren 1 bis 3 in einer Draufsicht in der bereits in Figur 3 gezeigten Position,
- Fig. 5: die Schlauchkupplung aus den Figuren 1 bis 4 in einer Perspektivdarstellung, wobei das Kupplungselement mit seinem Kupplungskopf in einer Schwenkposition gezeigt ist, in welcher der Kupplungskopf in eine Kupplungskopf-Aufnahme am Kupplungs-Gegenelement schwenkbar einsetzbar ist,
- Fig. 6: die Schlauchkupplung aus den Figuren 1 bis 5 in der bereits in Figur 5 gezeigten Schwenkposition in einer Draufsicht,
- Fig. 7: die Schlauchkupplung aus den Figuren 1 bis 6 in einer perspektivischen Darstellung auf die Halteposition von Kupplungselement und Kupplungs-Gegenelement,
- Fig. 8: die in den Figuren 1 bis 7 gezeigte Schlauchkupplung in der bereits in Figur 7 dargestellte Halteposition in einer Draufsicht,
- Fig. 9: die in den Figuren 1 bis 8 gezeigte Schlauchkupplung in der bereits in den Figuren 7 und 8 dargestellten Halteposition in einem Längsschnitt,
- Fig. 10: die Schlauchkupplung aus den Figuren 1 bis 9, wobei das Kupplungselement am Kupplungs-Gegenelement mit einem nach oben hin offenen, aber gegenüber den Figuren 1 bis 9 vereinfacht ausgebildeten Halteclip in seiner Halteposition lösbar gesichert ist,
- Fig. 11: die Schlauchkupplung aus den Figuren 1 bis 9, wobei das Kupplungselement am Kupplungs-Gegenelement mit einem nach unten offenen Halteclip lösbar gesichert ist,
- Fig. 12: die Schlauchkupplung aus den Figuren 1 bis 9, wobei das Kupplungselement am Kupplungs-Gegenelement mit einem seitlich offenen Halteclip lösbar gesichert ist,
- Fig. 13: die Schlauchkupplung aus den Figuren 1 bis 9, wobei das Kupplungselement am Kupplungs-Gegenelement mit einem Kabelbinder gesichert ist,
- Fig. 14: die Schlauchkupplung aus den Figuren 1 bis 9, wobei das Kupplungselement am Kupplungs-Gegenelement mit einem Tape oder Klebeband gesichert ist und
- Fig. 15: die Schlauchkupplung aus den Figuren 1 bis 9, wobei das Kupplungselement am Kupplungs-Gegenelement mit einem U-förmigen Haltebügel gesichert ist, bei dem die beidseits der Schlauchleitung angeordneten freien Stege der U-Form mittels einer Schraubverbindung zusätzlich gesichert werden können.

In Figur 1 ist eine Schlauchkupplung 1 erkennbar, die am Schlauchende einer flexiblen Schlauchleitung 2 vorgesehen ist, welche einen Wasserverbraucher oder eine Wasserentnahmestelle mit einer Wasserzufuhr verbindet. Die Schlauchkupplung 1 weist dazu ein Kupplungselement 3 auf, das an dem Schlauchende der flexiblen Schlauchleitung 2 vorgesehen ist. Das Kupplungselement 3 ist mit einem Kupplungs-Gegenelement 4 der Schlauchkupplung 1 lösbar verbindbar. Dabei ist im Kupplungselement 3 sowie im Kupplungs-Gegenelement 4 jeweils zumindest ein Fluidkanal 5, 6 geführt, welche Fluidkanäle 5, 6 in der in den Figuren 1, 2 und 7 bis 9 gezeigten Halteposition der Schlauchkupplung 1 flüssigkeitsdicht miteinander verbunden sind.

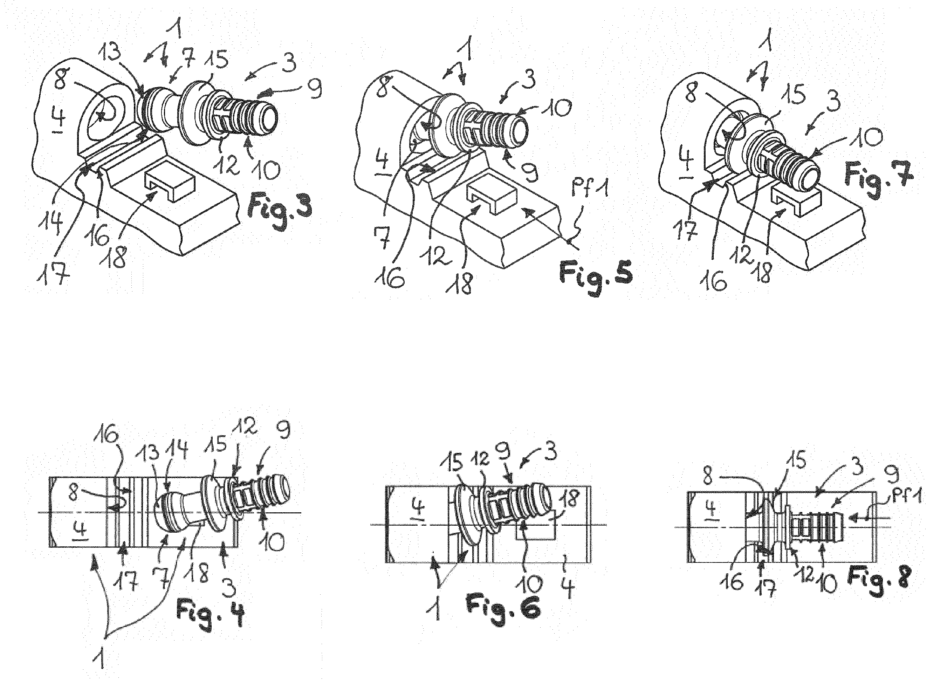

In dem in den Figuren 1 bis 9 gezeigten Ausführungsbeispiel weist das Kupplungselement 3 einen Kupplungskopf 7 auf, der in der in den Figuren 5 und 6 gezeigten Schwenkposition in eine Kupplungskopf-Aufnahme 8 am Kupplungs-Gegenelement 4 einsetzbar ist. Dabei sind das Kupplungselement 3 und das Kupplungs-Gegenelement 4 zwischen der in Figur 5 und 6 gezeigten Schwenkposition und einer in den Figuren 7 bis 9 dargestellten Halteposition verschwenkbar, in welcher Halteposition der Kupplungskopf 7 in der Kupplungskopf-Aufnahme 8 gehalten ist und gesichert werden kann.

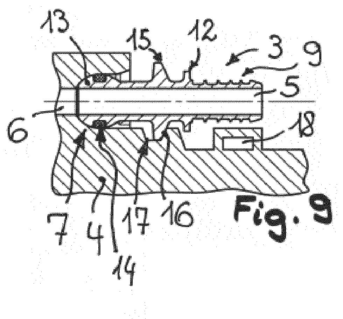

Aus dem Längsschnitt in Figur 9 wird deutlich, dass das Kupplungselement 3 hülsenförmig ausgebildet ist, wobei der der flexiblen Schlauchleitung 2 zugewandte Hülsen-Teilbereich des Kupplungselements 3 als Anschlussstutzen 9 ausgebildet ist, auf welchen Anschlussstutzen 9 das zugeordnete Schlauchende der Schlauchleitung 2 aufschiebbar ist. Um das auf den Anschlussstutzen 9 aufgeschobene Schlauchende auf dem Kupplungselement 3 zu halten, weist das Kupplungselement 3 am Hülsen-Außenumfang seines Anschlussstutzens 9 eine Halteprofilierung 10 auf. Damit sich das am Schlauchinnenumfang elastische Schlauchmaterial der flexiblen Schlauchleitung 2 fest in die Halteprofilierung 10 eingräbt, und damit das den Anschlussstutzen 9 umgreifende Schlauchende nicht unbeabsichtigt vom Anschlussstutzen 9 abgezogen werden kann, kann das Schlauchende der Schlauchleitung 2 auf dem Anschlussstutzen 9 mittels einer das Schlauchende umschließenden, verpressten Quetsch- oder Crimphülse 11 gesichert sein.

Das Kupplungselement 3 weist außenumfangsseitig einen Ringabsatz oder Ringflansch 12 auf, der als Schiebeanschlag beim Aufschieben des zugeordneten Schlauchendes der Schlauchleitung 2 dient. Um den in die Kupplungskopf-Aufnahme 8 eingesetzten Kupplungskopf 7 zwischen der Halteposition und der Schwenkposition verschwenken zu können und um diesen Bereich der Wasserführung abzudichten, weist das Kupplungselement 3 an seinem dem Anschlussstutzen 9 abgewandten Hülsen-Endbereich einen Kugelkopf 13 auf, der in die als kugelige Gelenkpfanne ausgestaltete Kupplungskopf-Aufnahme 8 einsetzbar ist. Um diesen Bereich der Schlauchkupplung noch zusätzlich abzudichten, kann der Kupplungskopf 7 oder die Kupplungskopf-Aufnahme 8 zumindest eine umlaufende Dichtung tragen, die an dem jeweils anderen Element 8, 7 der Schlauchkupplung 1 dichtend anliegt. In dem hier dargestellten Ausführungsbeispiel trägt der Kupplungskopf 7 in einer quer zur Kupplungs-Längsachse orientierten Querschnittsebene, vorzugsweise im Bereich des Äquators der Kugelform des Kugelkopfes 13, eine umlaufende Dichtung 14, die in der Halteposition an einer die Kupplungskopf-Aufnahme begrenzenden Wandung des Kupplungs-Gegenelements 4 anliegt.

Wie insbesondere aus den Figuren 3 bis 9 deutlich wird, steht in dem über das Schlauchende der Schlauchleitung 2 vorstehenden Hülsen-Teilbereich des Kupplungselementes 3 außenumfangsseitig ein Halteflansch 15 vor, der in der Halteposition zumindest bereichsweise eine Haltewandung 16 hintergreift, welche Haltewandung 16 in Einschieberichtung Pf1 vor der Kupplungskopf-Aufnahme 8 angeordnet ist. Um diese Haltewandung 16 auf einfache Weise auszubilden, ist in Einschieberichtung Pf1 vor der Kupplungskopf-Aufnahme 8 eine Haltenut 17 vorgesehen, während die Kupplungskopf-Aufnahme 8 abgewandte Nutwand als Haltewandung 16 ausgebildet ist. Damit der Halteflansch 15 beim Einschwenken des Kupplungselements 3 in die Halteposition leicht in die Haltenut 17 findet, weist die Haltenut 17 einen trapez- oder kegelförmigen Querschnitt auf, dessen größte lichte Weite im Bereich der Nutöffnung vorgesehen ist.

Am Kupplungs-Gegenstück 4 ist zumindest eine Halteöse 18 für ein Sicherungsmittel vorgesehen, mit dessen Hilfe das Kupplungselement 3 am Kupplungs-Gegenelement gegen ein Ausschwenken aus der Halteposition gehalten und gesichert werden kann. Dabei kann das Sicherungsmittel derart durch die Halteöse gefädelt werden, dass das die Schlauchleitung 2 oder das Kupplungselement 3 umschlingende Sicherungsmittel die Halteöse durchsetzt.

Aus einem Vergleich der Figuren 1 bis 15 wird deutlich, dass die verschiedensten Sicherungsmittel verwendbar sind. In dem in den Figuren 1 bis 9 gezeigten Ausführungsbeispiel ist am Kupplungs-Gegenelement 4 ein Halteclip 19 vorgesehen, der eine nach oben hin offene Einclipsöffnung hat. Durch Einschwenken des Kupplungselements 3 in die Halteposition werden die freien Enden des Halteclip 19 im Bereich der Einclipsöffnung derart geweitet, bis das Kupplungselement 3 in den Halteclip 19 einrastet und die freien Ende des Halteclip wieder zurückfedern können.

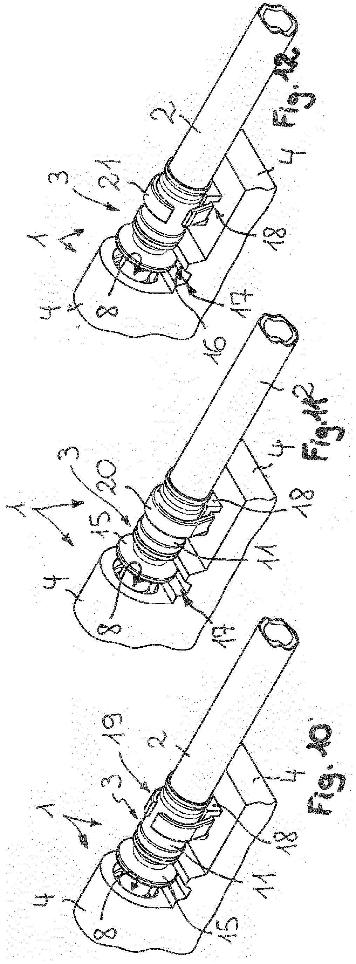

Das in Figur 10 gezeigte Ausführungsbeispiel der Schlauchkupplung 1 weist ebenfalls einen Halteclip 19 auf, der gegenüber den in den Figuren 1 und 2 gezeigten Ausführungsbeispiel jedoch vereinfacht ausgebildet ist.

Bei dem in Figur 11 gezeigten Ausführungsbeispiel ist ein nach unten geöffneter Halteclip 20 als Sicherungsmittel verwendet.

Bei dem in Figur 12 gezeigten Ausführungsbeispiel wird das Sicherungsmittel durch einen seitlich offenen Halteclip 21 gebildet.

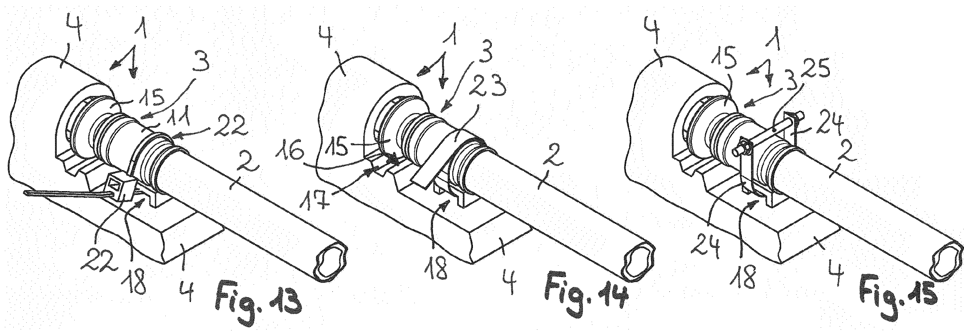

Bei dem in Figur 13 gezeigten Ausführungsbeispiel der Schlauchkupplung 1 wird ein Kabelbinder 22 als Sicherungsmittel verwendet, welcher Kabelbinder 22 die Halteöse 18 durchsetzt und die Schlauchleitung 2 umschlingt.

In Figur 14 ist das Sicherungsmittel durch ein Klebeband oder Tape 23 gebildet, das zumindest an seinen Bandenden lösbar verschließbar ist.

Bei dem in Figur 15 gezeigten Ausführungsbeispiel ist das Sicherungsmittel als U-förmiger Bügel 24 ausgebildet, wobei die bei der Schlauchleitung 2 überstehenden freien Bügelenden des U-Bügels 24 mittels einer Schraubverbindung 25 miteinander verbindbar und sicherbar sind. Über die oben beschriebenen Befestigungsmöglichkeiten hinaus kann das Kupplungselement 3 aber auch magnetisch am Kupplung-Gegenelement 4 gehalten werden. So könnte beispielsweise anstelle der Öse 18 ein Magnet angebracht sein, der mit einer Quetschhülse aus ferromagnetischem Material oder mit einem ferromagnetischen Gegenstück zusammenwirkt, welches an der Schlauchleitung angebracht ist. Da diese magnetisch wirksamen Varianten im Vergleich zu den oben dargestellten Befestigungsmöglichkeiten eine relativ lose Fixierung darstellen, ist dies nur für eine Anwendung sinnvoll, bei der die Schlauchkupplung regelmäßig und in kurzen Zeitabständen entfernt werden muss.

Die hier dargestellte Schlauchkupplung 1 lässt sich überall vorteilhaft einsetzen, wo Fluide zumindest abschnittsweise über eine flexible Schlauchleitung geführt werden sollen. Die hier dargestellte Schlauchkupplung 1 ist jedoch bevorzugt in eine sanitäre Wasserleitung einsetzbar. Hier kann die Schlauchkupplung 1 beispielsweise am Wassereingang oder Wasserzulauf eines Toiletten-Spülkastens 26 angeordnet werden. Dabei ist das Kupplungs-Gegenelement am Toiletten-Spülkasten 26 unverrückbar gehalten, während demgegenüber das Kupplungselement 2 der Schlauchkupplung 1 am zugeordneten Schlauchende der flexiblen Schlauchleitung 2 vorgesehen ist.

### Bezugszeichenliste

- 1: Schlauchkupplung
- 2: Schlauchleitung
- 3: Kupplungselement
- 4: Kupplungs-Gegenelement
- 5: Fluidkanal
- 6: Fluidkanal
- 7: Kupplungskopf
- 8: Kupplungskopf-Aufnahme
- 9: Anschlussstutzen
- 10: Halteprofilierung
- 11: Quetschhülse
- 12: Ringflansch
- 13: Kugelkopf
- 14: Dichtung
- 15: Halteflansch
- 16: Haltewandung
- 17: Haltenut
- 18: Halteöse
- 19: Halteclip (gemäß den Figuren 1, 2 und 10)
- 20: Halteclip
- 21: Halteclip
- 22: Kabelbinder
- 23: Klebeband oder Tape
- 24: U-Bügel
- 25: Schraubverbindung
- 26: Toiletten-Spülkasten
- Pf1: Einschieberichtung

## Patentansprüche

1. Schlauchkupplung (1) mit einem Kupplungselement (3), das ausgelegt ist, ein Schlauchende einer flexiblen Schlauchleitung (2) halten zu können, und mit einem Kupplungs-Gegenelement (4), das mit dem Kupplungselement (3) lösbar verbindbar ist, wobei im Kupplungselement (3) und im Kupplungs-Gegenelement (4) jeweils zumindest ein Fluidkanal (5, 6) geführt ist, und wobei die Fluidkanäle (5, 6) des Kupplungselements (3) sowie des damit verbundenen Kupplungs-Gegenelements (4) in einer Halteposition von Kupplungselement (3) und Kupplungs-Gegenelement (4) flüssigkeitsdicht miteinander verbunden sind, **wobei** das Kupplungselement (3) oder das Kupplungs-Gegenelement (4) einen Kupplungskopf (7) aufweist, der in einer Schwenkposition in eine Kupplungskopf-Aufnahme des jeweils anderen Elements (4; 3) der Schlauchkupplung (1) einsetzbar ist, und das Kupplungselement (3) und das Kupplungs-Gegenelement (4) zwischen der Schwenkposition und der Halteposition relativ zueinander verschwenkbar sind, in welcher Halteposition der Kupplungskopf (7) in der Kupplungskopf-Aufnahme (8) gehalten ist,
**dadurch gekennzeichnet, dass** der Kupplungskopf (7) als Kugelkopf (13) ausgebildet und die Kupplungskopf-Aufnahme (8) als Gelenkpfanne ausgestaltet ist.

2. Schlauchkupplung nach Anspruch 1, **dadurch gekennzeichnet, dass** die Kupplungskopf-Aufnahme (8) als kugelige Gelenkpfanne ausgestaltet ist.

3. Schlauchkupplung nach Anspruch 1 oder 2, **dadurch gekennzeichnet, dass** der Kupplungskopf (7) oder die Kupplungskopf-Aufnahme (8) zumindest eine umlaufende Dichtung trägt, die an dem jeweils anderen Element (8, 7) der Schlauchkupplung (1) dichtend anliegt.

4. Schlauchkupplung nach einem der Ansprüche 1 bis 3, **dadurch gekennzeichnet, dass** der Kupplungskopf (7) in einer quer zur Kupplungskopf-Längsachse orientierten Querschnittsebene, vorzugsweise im Bereich des Äquators der Kugelform des Kugelkopfes (13), eine umlaufende Dichtung (14) trägt, welche Dichtung (14) in der Halteposition an einer die Kupplungskopf-Aufnahme (8) begrenzenden Wandung dicht anliegt.

5. Schlauchkupplung nach einem der Ansprüche 1 bis 4, **dadurch gekennzeichnet, dass** das Kupplungselement (3) hülsenförmig ausgebildet ist, und dass der der flexiblen Schlauchleitung (2) zugewandte Teilbereich des Kupplungselements (3) als Anschlussstutzen (9) ausgebildet ist, auf welchen Anschlussstutzen (9) das zugeordnete Schlauchende der Schlauchleitung (2) aufschiebbar ist.

6. Schlauchkupplung nach Anspruch 5, **dadurch gekennzeichnet, dass** das Kupplungselement (3) außenumfangsseitig einen Ringflansch (12) oder Ringabsatz aufweist, der als Schiebeanschlag beim Aufschieben des zugeordneten Schlauchendes der Schlauchleitung (2) dient.

7. Schlauchkupplung nach Anspruch 5 oder 6, **dadurch gekennzeichnet, dass** das Kupplungselement (3) an seinem dem Anschlussstutzen (9) abgewandten Hülsenendbereich den Kugelkopf (13) trägt.

8. Schlauchkupplung nach einem der Ansprüche 5 bis 7, **dadurch gekennzeichnet, dass** in dem über das Schlauchende der Schlauchleitung (2) vorstehenden Hülsen-Teilbereich des Kupplungselementes (3) außenumfangsseitig ein Halteflansch (15) vorsteht, der in der Halteposition zumindest bereichsweise eine Haltewandung (16) hintergreift, welche Haltewandung (16) in Einschieberichtung (Pf1) vor der Kupplungskopf-Aufnahme (9) angeordnet ist.

9. Schlauchkupplung nach Anspruch 8, **dadurch gekennzeichnet, dass** in Einschieberichtung (Pf1) vor der Kupplungskopf-Aufnahme (8) eine Haltenut (17) vorgesehen ist, deren die Kupplungskopf-Aufnahme (8) abgewandte Nutwand als Haltewandung (16) ausgebildet ist.

10. Schlauchkupplung nach Anspruch 9, **dadurch gekennzeichnet, dass** die Haltenut (17) einen trapez- oder kegelförmigen Querschnitt aufweist, dessen größte lichte Weite im Bereich der Nutöffnung vorgesehen ist.

11. Schlauchkupplung nach einem der Ansprüche 1 bis 10,
**dadurch gekennzeichnet, dass** der Schlauchkupplung (1) wenigstens ein Sicherungsmittel zugeordnet ist, mit dessen Hilfe das Kupplungselement (3) am Kupplungs-Gegenelement (4) gegen ein Ausschwenken aus der Halteposition gehalten und gesichert ist.

12. Schlauchkupplung nach einem der Ansprüche 1 bis 11,
**dadurch gekennzeichnet, dass** das Sicherungsmittel als Kabelbinder (22), als Klebeband oder Tape (23), als Klettband, als U-Bügel (24), als Halteklammer oder Halteclip (19, 20, 21) ausgebildet ist.

13. Schlauchkupplung nach Anspruch 11 oder 12, **dadurch gekennzeichnet, dass** am Kupplungs-Gegenstück (4) zumindest eine Halteöse (18) für das Sicherungsmittel vorgesehen ist, und dass das die Schlauchleitung (2) oder das Kupplungselement (3) umschlingende Sicherungsmittel die Halteöse (18) durchsetzt.

14. Schlauchkupplung nach einem der Ansprüche 1 bis 13, **dadurch gekennzeichnet, dass** die Schlauchkupplung (1) in eine sanitäre Wasserleitung einsetzbar ist.

15. Schlauchkupplung nach einem der Ansprüche 1 bis 14, **dadurch gekennzeichnet, dass** die Schlauchkupplung (1) am Wassereingang oder Wasserzulauf eines Toiletten-Spülkastens (26) anordenbar ist.

## Claims

1. Hose coupling (1) with a coupling element (3), which is configured to be able to retain a hose end of a flexible hose line (2), and with a coupling mating element (4), which is releasably connectable to the coupling element (3), wherein at least one fluid duct (5, 6) is guided in each case in the coupling element (3) and in the coupling mating element (4), and wherein the fluid ducts (5, 6) of the coupling element (3) and of the coupling mating element (4) connected thereto are connected to one another liquid-tightly in a retaining position of coupling element (3) and coupling mating element (4), **wherein** the coupling element (3) or the coupling mating element (4) has a coupling head (7) which, in a pivoted position, is insertable into a coupling head receptacle of the respective other element (4; 3) of the hose coupling (1), and the coupling element (3) and the coupling mating element (4) are pivotable relative to each other between the pivoted position and the retaining position, in which retaining position the coupling head (7) is retained in the coupling head receptacle (8), **characterized in that** the coupling head (7) is designed as a spherical head (13) and the coupling head receptacle (8) is configured as a socket.

2. Hose coupling according to Claim 1, **characterized in that** the coupling head receptacle (8) is configured as a spherical socket.

3. Hose coupling according to Claim 1 or 2, **characterized in that** the coupling head (7) or the coupling head receptacle (8) bears at least one peripheral seal which lies sealingly against the respective other element (8, 7) of the hose coupling (1).

4. Hose coupling according to one of Claims 1 to 3, **characterized in that**, in a cross-sectional plane oriented transversely with respect to the coupling head longitudinal axis, preferably in the region of the equator of the spherical shape of the spherical head (13), the coupling head (7) bears a peripheral seal (14), which seal (14) in the retaining position lies tightly against a wall bounding the coupling head receptacle (8).

5. Hose coupling according to one of Claims 1 to 4, **characterized in that** the coupling element (3) is sleeve-shaped, and **in that** the partial region of the coupling element (3) that faces the flexible hose line (2) is designed as a connector (9), onto which connector (9) the associated hose end of the hose line (2) can be pushed.

6. Hose coupling according to Claim 5, **characterized in that** the coupling element (3) has, on the outer circumferential side, an annular flange (12) or annular shoulder which serves as a sliding stop when pushing on the associated hose end of the hose line (2).

7. Hose coupling according to Claim 5 or 6, **characterized in that** the coupling element (3), at its sleeve end region facing away from the connector (9), bears the spherical head (13).

8. Hose coupling according to one of Claims 5 to 7, **characterized in that** a retaining flange (15) protrudes on the outer circumferential side in the sleeve partial region of the coupling element (3) that protrudes over the hose end of the hose line (2), said retaining flange, in the retaining position, gripping at least in regions behind a retaining wall (16), which retaining wall (16) is arranged upstream of the coupling head receptacle (9) in the pushing-in direction (Pf1).

9. Hose coupling according to Claim 8, **characterized in that** a retaining groove (17) is provided upstream of the coupling head receptacle (8) in the pushing-in direction (Pf1), the groove wall of which retaining groove facing away from the coupling head receptacle (8) is designed as the retaining wall (16).

10. Hose coupling according to Claim 9, **characterized in that** the retaining groove (17) has a trapezoidal or conical cross section, the largest clear width of which is provided in the region of the groove opening.

11. Hose coupling according to one of Claims 1 to 10, **characterized in that** the hose coupling (1) is assigned at least one securing means, with the aid of which the coupling element (3) is retained and secured on the coupling mating element (4) against pivoting out of the retaining position.

12. Hose coupling according to one of Claims 1 to 11, **characterized in that** the securing means is designed as a cable connector (22), as an adhesive strip or tape (23), as a hook-and-loop fastener, as a U-clip (24), as a retaining clamp or retaining clip (19, 20, 21).

13. Hose coupling according to Claim 11 or 12, **characterized in that** at least one retaining eye (18) for the securing means is provided on the coupling mating piece (4), and **in that** the securing means looping around the hose line (2) or the coupling element (3) passes through the retaining eye (18).

14. Hose coupling according to one of Claims 1 to 13, **characterized in that** the hose coupling (1) can be inserted into a sanitary water line.

15. Hose coupling according to one of Claims 1 to 14, **characterized in that** the hose coupling (1) can be arranged on the water input or water inlet of a toilet cistern (26).

## Revendications

1. Raccord de tuyau (1) avec un élément de raccord (3) qui est conçu pour pouvoir maintenir une extrémité de tuyau d'une conduite en tuyau flexible (2) et avec un élément de raccord homologue (4) qui peut être relié de façon détachable avec l'élément de raccord (3), au moins un canal de fluide (5, 6) étant guidé respectivement dans l'élément de raccord (3) et dans l'élément de raccord homologue (4) et les canaux de fluide (5, 6) de l'élément de raccord (3) ainsi que de l'élément de raccord homologue (4) étant reliés entre eux de façon étanche aux fluides dans une position de maintien de l'élément de raccord (3) et de l'élément de raccord homologue (4), dans lequel l'élément de raccord (3) ou l'élément de raccord homologue (4) présente une tête de raccord (7) qui peut être insérée, dans une position de pivotement, dans un réceptacle de tête de raccord de l'autre élément (4 ; 3) du raccord de tuyau (1), et l'élément de raccord (3) et l'élément de raccord homologue (4) peuvent pivoter l'un par rapport à l'autre entre la position de pivotement et la position de maintien, la tête de raccord (7) étant maintenue dans le réceptacle de tête de raccord (8) dans ladite position de maintien, **caractérisé en ce que** la tête de raccord (7) est configurée comme une tête sphérique et le réceptacle de tête de raccord (8) conformé comme une cavité articulaire.

2. Raccord de tuyau selon la revendication 1, **caractérisé en ce que** le réceptacle de tête de raccord (8) est conformé comme une cavité articulaire sphérique.

3. Raccord de tuyau selon la revendication 1 ou 2, **caractérisé en ce que** la tête de raccord (7) ou le réceptacle de tête de raccord (8) porte au moins un joint périphérique qui repose de façon étanche contre l'autre élément (8, 7) du raccord de tuyau (1).

4. Raccord de tuyau selon une des revendications 1 à 3, **caractérisé en ce que** la tête de raccord (7) porte un joint périphérique (14) dans un plan transversal orienté transversalement par rapport à l'axe longitudinal de la tête de raccord, de préférence dans la région de l'équateur de la forme sphérique de la tête sphérique (13), lequel joint (14) repose de façon étanche, dans la position de maintien, contre une paroi délimitant le réceptacle de tête de raccord (8).

5. Raccord de tuyau selon une des revendications 1 à 4, **caractérisé en ce que** l'élément de raccord (3) est configuré en forme de douille et que la région de l'élément de raccord orientée vers la conduite en tuyau flexible (2) est configurée comme un manchon de raccordement (9), l'extrémité de tuyau associée de la conduite en tuyau (2) pouvant glisser sur ledit manchon de raccordement (9).

6. Raccord de tuyau selon la revendication 5, **caractérisé en ce que** l'élément de raccord (3) présente sur sa face périphérique extérieure une collerette annulaire (12) ou un épaulement annulaire qui fait office de butée de coulissement lors du coulissement de l'extrémité de tuyau associée de la conduite en tuyau (2).

7. Raccord de tuyau selon la revendication 5 ou 6, **caractérisé en ce que** l'élément de raccord (3) porte la tête sphérique (13) sur sa région terminale en forme de douille opposée au manchon de raccordement (9).

8. Raccord de tuyau selon une des revendications 5 à 7, **caractérisé en ce que**, dans la région en forme de douille de l'élément de raccord (3) saillant au-dessus de l'extrémité de tuyau de la conduite en tuyau (2), saille sur la face périphérique extérieure une collerette de maintien (15) qui, en position de maintien, vient en prise par derrière au moins en partie sur une paroi de maintien (16), laquelle paroi de maintien (16) est disposée.

9. Raccord de tuyau selon la revendication 8, **caractérisé en ce que** devant le réceptacle de tête de raccord (9) dans la direction d'insertion (Pf1) est prévue une rainure de maintien (17) dont la paroi de rainure opposée au réceptacle de tête de raccord (8) est configurée comme une paroi de maintien (16).

10. Raccord de tuyau selon la revendication 9, **caractérisé en ce que** la rainure de maintien (17) présente une section transversale trapézoïdale ou conique dont la plus grande largeur intérieure est prévue dans la région de l'ouverture de rainure.

11. Raccord de tuyau selon une des revendications 1 à 10, **caractérisé en ce qu'**à ce raccord de tuyau (1) est associé au moins un moyen de sécurisation à l'aide duquel l'élément de raccord (3) peut être maintenu sur l'élément de raccord homologue (4) et sécurisé contre un pivotement hors de la position de maintien.

12. Raccord de tuyau selon une des revendications 1 à 11, **caractérisé en ce que** le moyen de sécurisation est configuré comme un serre-câble (22), comme un ruban adhésif ou Tape (23), comme un ruban auto-agrippant, comme un étrier en U (24) ou comme une agrafe de maintien ou un clip de maintien (19, 20, 21).

13. Raccord de tuyau selon la revendication 11 ou 12, **caractérisé en ce que** sur l'élément de raccord homologue (4) est prévu au moins un oeillet de maintien (18) pour le moyen de sécurisation et que le moyen de sécurisation entourant la conduite en tuyau (2) ou l'élément de raccord (3) traverse l'oeillet de maintien (18).

14. Raccord de tuyau selon une des revendications 1 à 13, **caractérisé en ce que** ce raccord de tuyau (1) peut être utilisé dans une conduite d'eau sanitaire.

15. Raccord de tuyau selon une des revendications 1 à 14, **caractérisé en ce que** ce raccord de tuyau (1) peut être agencé sur l'entrée d'eau ou la sortie d'eau d'une chasse d'eau de toilette (26).
